# EUROPÄISCHE PATENTANMELDUNG

(11) **EP 0 765 708 A1**
(43) Veröffentlichungstag der Anmeldung: **02.04.1997**
(21) Anmeldenummer: 96202559.9
(22) Anmeldetag: 12.09.1996
(51) Int. Cl.: B23K 1/08, B23K 3/06

(54) **Wellenlötmaschine und Verfahren zur Einstellung und automatischen Kontrolle der Höhe einer Lötwelle**

(30) Priorität: 26.09.1995 DE 19535688
(71) Anmelder: Philips Patentverwaltung GmbH, 22335 Hamburg (DE); Philips Electronics N.V., 5621 BA Eindhoven (NL)
(72) Erfinder: Flache, Norbert, 22335 hamburg (DE)
(74) Vertreter: Erdmann, Anton, Dipl.-Ing.

(57) **Zusammenfassung**

Die Erfindung bezieht sich auf eine Wellenlötmaschine mit mindestens einer Vorrichtung zur Erzeugung mindestens einer aus flüssigem Lot (10) bestehenden Lötwelle (10a) zur Benetzung von über die Lötwelle (10a) hinweg geführten Baugruppen (22). Zur reproduzierbaren Einstellung und Regelung der Wellenhöhe (24) wird vorgeschlagen, in den Förderweg des Lotes (10), vorzugsweise in unmittelbarer Nähe der Düsenöffnung (13), mindestens einen temperaturkompensierten Drucksensor (18) anzuordnen.

## Beschreibung

Die Erfindung bezieht sich auf eine Wellenlötmaschine mit mindestens einer Vorrichtung zur Erzeugung mindestens einer aus flüssigem Lot bestehenden Lötwelle zur Lötung von über die Lötwelle hinweg geführten Baugruppen. Die Erfindung bezieht sich ferner auf ein Verfahren zur Einstellung und automatischen Kontrolle der Höhe der aus flüssigem Lot bestehenden Lötwelle einer Lötmaschine.

Eine Wellenlötmaschine der eingangs genannten Art ist z.B. durch die DE-A-95 12 902 vorgeschlagen worden. Diese Lötanlage besitzt quer zur Transportrichtung angeordnete sogenannte Lötwellen, die aus flüssigem Lötzinn bestehen und die die zu lötenden Baugruppen von unten benetzen. Das flüssige Lot wird dabei aus einem Bad mittels einer Pumpe in einen Düsenspalt (Zinndüse) gefördert, so daß das Lot in Form eines Films austritt und die Gestalt einer Lötwelle annimmt. Bei Anlagen bzw. Maschinen dieser Art muß die Höhe der Lötwelle so eingestellt werden, daß eine optimale Benetzung der über sie hinweg geführten Baugruppen stattfindet. Dies erfordert, daß die Lötwelle nicht zu niedrig verläuft, da in diesem Falle kein Lot die Baugruppen benetzen würde. Andererseits darf die Lötwelle nicht zu hoch sein, da in solch einem Falle Kurzschlußbrücken auf den Baugruppen gebildet würden und Lot z.B. durch Bohrungen der Baugruppen dringen würde. Daraus ergibt sich die Forderung, daß die Höhe der Lötwelle gerade so eingestellt sein muß, daß die genannten Bedingungen erfüllt sind. Bei der bekannten Bauart erfolgt die Einstellung der Höhe durch Versuche, wobei dann nach Erreichen der optimalen Höhe die dafür erforderlichen Randbedingungen festgelegt werden. Dies bedeutet, daß dazu einerseits der Spalt in der Zinndüse, durch welche das Lot nach oben befördert wird, und andererseits die pro Zeiteinheit geförderte Lotmenge für einen bestimmten Vorgang festgelegt wird. Wenn sich dann irgendwelche Randbedingungen ändern, die eine Veränderung der Höhe der Lötwelle erfordern, muß durch Versuche erneut die optimale Höhe der Lötwelle ermittelt werden, so daß danach die entsprechenden Parameter, wie Spaltbreite und Fördermenge, neu eingestellt werden können.

Durch die US-PS 48 90 781 ist eine computergesteuerte Lötmaschine bekannt geworden. Dabei wird die Höhe der Lötwelle relativ zu den zu lötenden Baugruppen mit Hilfe eines Sensors kontrolliert. Bei diesem Sensor handelt es sich um einen über der Lötwelle montierten Näherungssensor.

Der Erfindung liegt die Aufgabe zugrunde, die Einstellung der Höhe der Lötwelle zu vereinfachen und während des Betriebes konstant zu halten.

Diese Aufgabe wird gemäß der Erfindung bei einer Wellenlötmaschine der eingangs genannten Art dadurch gelöst, daß in den Förderweg des Lotes vor dem Austritt aus einem Düsenspalt mindestens ein den Durchfluß messender Sensor angeordnet ist, der mit einer Datenvergleichsanordnung verbunden ist.

Damit ergibt sich der Vorteil, auf schnelle, einfache und unkomplizierte Weise die Höhe der jeweils erforderlichen Lötwelle einzustellen und diese, je nach dem erforderlichen Bedarf, auch während eines Lötvorganges den jeweils erforderlichen Bedürfnissen anzupassen. Damit kann das Lötergebnis verbessert werden, da ein umständliches Anpassen an die neuen Werte durch Versuche, wie bisher, entfallen kann. Ein derartiger Sensor ist wenig störanfällig und liefert zuverlässige Daten.

Die von diesem Sensor ermittelten Istwerte werden dabei gemäß dem unten beschriebenen Verfahren mit einem Sollwert verglichen, und in Abhängigkeit dieses Vergleiches erfolgt dann bei Bedarf eine Anpassung der zur Bildung der Lötwelle zugeführten Menge des Lötzinns.

In Ausgestaltung der Erfindung ist der Sensor ein temperaturkompensierter Drucksensor. Die richtige Einstellung der Höhe der Lötwelle erfolgt dann in Abhängikeit des von dem Drucksensor gemessenen Druckes des zugeführten Lotes. Die gemessenen Daten sind dabei unabhängig von der Temperatur. Damit ergibt sich eine einfache Möglichkeit zur reproduzierbaren Einstellung und Regelung der Wellenhöhe.

Bei einer Wellenlötmaschine mit einem einen Spalt aufweisenden Düsenkopf zur Bildung der Lötwelle ist in Ausgestaltung der Erfindung vorgesehen, den Drucksensor vorzugsweise möglichst nahe am Austrittsspalt anzuordnen. In diesem Bereich herrscht ein ausreichender Druck, so daß sich ein eindeutiger Zusammenhang zwischen gemessenem Druck, geförderter Zinnmenge und Wellenhöhe ergibt. Durch die gewählte Anordnung werden die Einflüsse auf die Strömung des Lotes (des Zinns) zwischen der Pumpeneinheit und dem Düsenspalt eliminiert, da die Meßstelle in unmittelbarer Nähe des Zinnaustritts angeordnet ist. Die Einbaulage des Sensors ist so gewählt, daß ein Einfluß auf die Form der Zinnwelle vermieden wird.

Ein Verfahren zur Einstellung der Höhe der Lötwelle ist dadurch gekennzeichnet, daß
- mit Hilfe des Sensors eine dem Durchfluß des die Lötwelle bildenden Lotes proportionale Größe gemessen wird, welche proportional zur Wellenhöhe ist,
- der gemessene Wert mit einem der gewünschten Höhe der Lötwelle entsprechenden Sollwert verglichen wird und
- bei Abweichung vom Sollwert die Menge des von einer Pumpe zugeführten Lotes durch Veränderung der Pumpendrehzahl erhöht oder erniedrigt wird.

Die genannte Größe kann z.B. der Druck sein. Der Vergleich der gemessenen Werte des Sensors und deren Auswertung erfolgt dabei in einer Vergleichs- und Answerteeinrichtung.

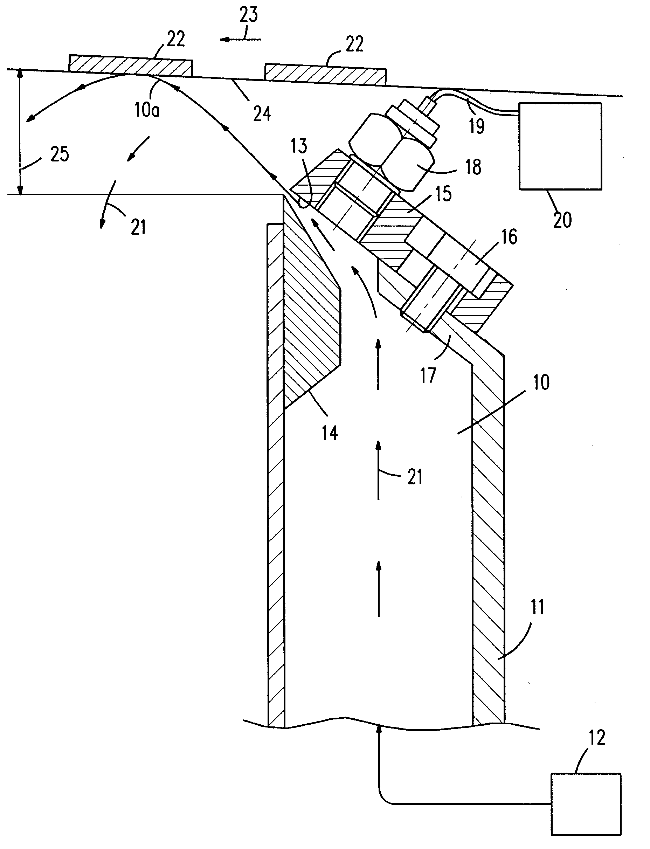

In der Zeichnung ist in der einzigen Figur ein Ausführungsbeispiel eines Düsenkopfes einer Wellenlötmaschine schematisch dargestellt, wobei oberhalb des Düsenkopfes ein Transportband mit zu lötenden Baugruppen angeordnet ist.

Die Figur zeigt den mit Lot 10 gefüllten Düsenkopf 11, aus dem mittels einer Pumpe 12 Lot nach oben in Richtung eines Düsenspaltes 13 gefördert wird. Der Düsenspalt 13 wird in diesem Beispiel gebildet aus einer ortsfesten Messerleiste 14 und einer variablen Messerleiste 15, die mittels Schrauben 16 auf einem Flansch 17 des Düsenkopfes 11 befestigt ist. In der Nähe des Düsenspaltes 13 ist als Sensor ein Drucksensor 18 angeordnet, der über eine Leitung 19 mit einer Auswerte- und Vergleichsanordnung 20 verbunden ist. Der Drucksensor 20 soll so nahe wie möglich am Düsenspalt 13 angeordnet sein, weil dort der Druck herrscht, den man für das Löten messen will. Das durch die Pumpe 12 geförderte Lot 10 wird in Pfeilrichtung 21 nach oben in Richtung des Düsenspaltes 13 gefördert und von dort gegen die Unterseite von Baugruppen 22 gedrückt, um dort entsprechende Kontaktteile miteinander zu verlöten. Die Baugruppen 22 werden in Pfeilrichtung 23 auf einem Transportband 24 befördert. Das aus dem Düsenspalt 13 austretende Lot 10 bildet eine sogenannte Lötwelle 10a.

Damit das aus dem Düsenspalt 13 austretende Lot 10 die richtige Förderhöhe 25 besitzt, erfolgt durch den Drucksensor 18 eine Messung des Druckes des geförderten Lotes 10. Wenn der Druck zu niedrig ist, nimmt das Lot einen durch 21' angedeuteten Weg, so daß keine ausreichende Benetzung der Baugruppen stattfinden kann. Wenn der Druck zu groß ist, wird das Lot 10 durch Öffnungen der Baugruppen hindurch gedrückt. Um die richtige Förderhöhe 25 zu erhalten, wird der von dem Sensor 18 gemessene Druck in der Vergleichsanordnung 20 mit einem Sollwert verglichen und kann auf diese Weise exakt eingestellt werden. Der Sensor 18 mißt somit eine dem Durchfluß bzw. der Wellenhöhe 25 proportionale Größe. Hierbei handelt es sich um den Druck in der Düse 13.

Aus der Vergleichsanordnung 20 wird eine Steuergröße an die Regelung der Pumpendrehzahl gegeben. Die Drehzahl der Pumpe 12 wird dann entsprechend diesen Vorgaben angepaßt (geschlossener Regelkreis).

Die Stellgröße für die Wellenhöhe 24 ist die Pumpendrehzahl, die Meßgröße für die Wellenhöhe 24 ist der durch den Sensor 18 gemessene Druck. Die Verknüpfung erfolgt durch eine entsprechende Logik in der Vergleichsanordnung.

Es sollen nur mittelschnelle bzw. langsame Veränderungen der Wellerhöhe 24 korrigiert werden. Hierfür ist der Vergleichsanordnung 20 ein entsprechendes Regelverhalten zu geben. Die entsprechenden Regelparameter müssen für jeden Maschinentyp individuell ermittelt werden.

Die jeweiligen Wellerhöhen sind produktspezifisch und müssen experimentell ermittelt werden. Sind die Wellerhöhen ermittelt, können diese als Sollwerte vorgegeben werden.

## Patentansprüche

1. Wellenlötmaschine mit mindestens einer Vorrichtung zur Erzeugung mindestens einer aus flüssigem Lot (10) bestehenden Lötwelle (10a) zur Lötung von über die Lötwelle (10a) hinweg geführten Baugruppen (22), dadurch gekennzeichnet, daß in den Förderweg des Lotes (10) vor dem Austritt aus einem Düsenspalt (13) mindestens ein den Durchfluß messender Sensor (18) angeordnet ist, der mit einer Datenvergleichsanordnung (20) verbunden ist.

2. Wellenlötmaschine nach Anspruch 1, dadadurch gekennzeichnet, daß der Sensor (18) ein temperaturkompensierter Drucksensor ist.

3. Wellenlötmaschine nach Anspruch 1 oder 2 mit einem einen Düsenspalt (13) aufweisenden Düsenkopf zur Bildung der Lötwelle (10a), dadurch gekennzeichnet, daß der Drucksensor (18) möglichst nahe am Düsenspalt (13) angeordnet ist.

4. Verfahren zur Einstellung der Höhe der aus flüssigem Lot (10) gebildeten Lötwelle (10a) einer Lötmaschine nach einem der Ansprüche 1 bis 3, dadurch gekennzeichent,
- daß mit Hilfe des Sensors (18) eine dem Durchfluß des die Lötwelle (10a) bildenden Lotes (10) proportionale Größe gemessen wird, welche proportional zur Wellenhöhe ist,
- daß der gemessene Wert mit einem der gewünschten Höhe (24) der Lötwelle (10a) entsprechenden Sollwert verglichen wird und
- daß bei Abweichung vom Sollwert die Menge des von einer Pumpe (12) zugeführten Lotes (10) durch Veränderung der Pumpendrehzahl erhöht oder erniedrigt wird.
